# FASCICULE DE BREVET EUROPEEN

(11) **EP 2 711 255 B1**
(45) Date de publication et mention de la délivrance du brevet: **06.07.2016**
(21) Numéro de dépôt: 13183577.9
(22) Date de dépôt: 09.09.2013
(51) Int. Cl.: B60S 3/04, B05B 12/12

(54) **Installation de lavage de véhicule**
Fahrzeugwaschanlage
Vehicle washing facility

(30) Priorité: 19.09.2012 FR 1202515
(43) Date de publication de la demande: 26.03.2014
(73) Titulaire: OKI, 79440 Courlay (FR)
(72) Inventeur: Gueret, Jean-Michel, 79300 Noirterre (FR)
(74) Mandataire: Godineau, Valérie

(56) Documents cités:
- EP-A1- 1 705 087
- JP-A- H0 456 664
- JP-A- H07 117 635
- US-A1- 2012 216 835

## Description

La présente invention concerne une installation de lavage de véhicule.

Elle concerne plus particulièrement une installation de lavage du type comprenant une structure support comportant une base d'appui au sol, un bras manipulateur porté par la structure support et monté mobile par rapport à la structure support, et un bras porte-buses de lavage couplé, de manière mobile, audit bras manipulateur.

Ces dernières années, des installations de lavage comprenant un portique guidé en translation le long d'un véhicule ont été remplacées par des installations de lavage robotisées, comme l'illustrent les brevets EP 1.705.087, EP 1.806.265 et JP H04 56664. Toutefois, ces installations sont complexes comme l'illustre le brevet EP 1.705.087 qui décrit une installation nécessitant l'utilisation de deux bras de robot ou d'un encombrement au sol important. Tel est le cas de l'installation à crémaillère décrite dans le brevet EP 1.806.265. Enfin de telles installations ne sont pas prévues pour permettre aisément, et à moindre coût, le passage du bras manipulateur de l'installation d'un emplacement de stationnement de véhicule à un autre emplacement pour permettre une entrée/sortie des véhicules de leur emplacement en temps masqué ce qui permet d'augmenter considérablement le nombre de véhicules traités par une telle installation.

Un but de la présente invention est donc de proposer une installation dont la conception permet une architecture simplifiée de l'installation.

Un autre but de la présente invention est de proposer une installation dont la conception permet d'atteindre des cadences élevées en termes de nombre de véhicules traités.

A cet effet, l'invention a pour objet une installation de lavage de véhicule du type comprenant une structure support comportant une base d'appui au sol, un bras manipulateur porté par la structure support et monté mobile par rapport à la structure support et un bras porte-buses de lavage couplé, de manière mobile, audit bras manipulateur,
caractérisée en ce que la structure support est une structure dite fixe destinée à être positionnée de manière stationnaire le long d'au moins un emplacement de stationnement de véhicule à nettoyer, en ce que le bras manipulateur est formé d'une première section de bras montée sur la structure support à rotation autour d'un axe dit horizontal parallèle au plan d'appui au sol de la base et d'une deuxième section de bras, sensiblement orthogonale à ladite première section de bras, et couplée à ladite première section de bras par une liaison pivot d'axe sensiblement parallèle à ladite première section de bras, et en ce que le bras porte-buses est un bras coudé couplé à ladite deuxième section de bras manipulateur d'une part, par une liaison à rotation autour d'un premier axe sensiblement orthogonal à l'axe longitudinal de ladite deuxième section de bras pour le déplacement du bras porte-buses entre une position repliée le long de ladite deuxième section de bras et une position d'extension dans laquelle il forme un prolongement de ladite deuxième section de bras et, d'autre part, par une liaison à rotation autour d'un deuxième axe sensiblement parallèle à l'axe longitudinal de la deuxième section de bras du bras manipulateur.

Les liaisons pivot ou à rotation entre bras porte-buses et bras manipulateur, entre bras manipulateur et structure support et entre sections de bras du bras manipulateur sont donc configurées pour permettre par rotation combinée d'une part du bras porte-buses autour de son deuxième axe de liaison à la deuxième section de bras, d'autre part, de la première section de bras par rapport à la structure support, le passage de la rampe formée par les buses d'une configuration dite horizontale à une configuration verticale et inversement, le bras porte-buses étant apte dans chacune des configurations à passer d'une position d'extension à une position repliée et inversement.

Les déplacements sont générés à partir de liaisons pivots ou rotatives de sorte que la gestion de déplacement est facilitée.

La conception d'une telle installation permet de s'affranchir de rail de translation du véhicule et de génie civil au niveau de l'emplacement de stationnement. L'absence de rail facilite l'accès aux personnes à mobilité réduite. La cinématique des bras de l'installation assure une proximité et une orientation améliorées des organes de lavage par rapport à la carrosserie du véhicule. Enfin, l'installation est compacte et monobloc rendant possible une utilisation itinérante de l'installation.

De préférence, le bras coudé porte-buses est formé de deux branches sensiblement en équerre, l'une des branches étant raccordée, par son extrémité libre, au bras manipulateur, l'autre branche portant les buses, lesdites buses étant disposées, de préférence alignées à la manière d'une rampe de buses, sur ladite branche.

De préférence, la branche porte-buses du bras porte-buses comporte en outre des moyens de séchage par soufflage de fluide. Les moyens de séchage comprennent au moins une turbine.

De préférence, chaque liaison pivot ou à rotation entre bras porte-buses et bras manipulateur ou entre bras manipulateur et structure support ou entre sections de bras du bras manipulateur est une liaison pilotée comprenant, de préférence, au moins un actionneur.

Chaque liaison pilotée est donc, de préférence, une liaison motorisée. Bien évidemment, les liaisons pilotées peuvent également, en remplacement de moteur, être équipées de moyens d'actionnement de type vérin.

De préférence, l'installation comporte des moyens de détection et/ou de mesure de la géométrie extérieure du véhicule, des moyens de stockage des paramètres caractérisant cette géométrie extérieure et une unité de pilotage des déplacements relatifs du bras porte-buses et du bras manipulateur au moins en fonction desdits paramètres.

L'unité de pilotage est, de préférence, configurée pour maintenir une distance sensiblement constante des buses de la surface extérieure du véhicule.

De préférence, les moyens de détection et/ou de mesure de la géométrie extérieure du véhicule sont portés par le bras porte-buses.

En variante, ces moyens de détection et/ou de mesure de la géométrie extérieure du véhicule peuvent être distincts du bras porte-buses et être installés par exemple en entrée de l'emplacement de stationnement du véhicule à nettoyer.

De préférence, l'installation comporte des moyens de mémorisation d'une pluralité de programmes de lavage, des moyens de sélection d'au moins un programme parmi lesdits programmes de lavage mémorisés et l'unité de pilotage est configurée pour piloter les déplacements relatifs du bras porte-buses et du bras manipulateur au moins en fonction du programme sélectionné.

Bien évidemment, l'installation peut comporter un seul programme de lavage. Toutefois, généralement elle comporte plusieurs programmes pour offrir un choix à l'utilisation.

Généralement des moyens de paiement sont combinés aux moyens de sélection d'un programme de lavage.

De préférence, l'installation comporte au moins une série, de préférence au moins deux séries, de moyens de matérialisation d'un emplacement de stationnement du véhicule à nettoyer, chaque série étant positionnable d'un côté ou de l'autre de la structure support pour permettre la matérialisation d'au moins deux emplacements.

La ou chaque série de moyens de matérialisation comprend des moyens, tels qu'un sabot, de matérialisation au sol dudit emplacement de stationnement et/ou des moyens de délimitation du périmètre dudit emplacement de stationnement associés à des moyens de détection de l'entrée et de la sortie dudit périmètre.

De préférence, l'installation comporte des moyens de détection de la position du véhicule à l'intérieur dudit emplacement et des moyens d'émission d'un signal d'alerte lorsque le positionnement est incorrect.

Généralement, à l'état installé de la structure support le long d'un, ou entre deux, emplacement(s) de stationnement de véhicule à nettoyer, l'axe de liaison de la première section de bras à la structure support s'étend sensiblement parallèlement à l'axe longitudinal du ou des emplacements de parking.

Il en résulte un passage aisé d'un emplacement de stationnement de véhicules à un autre.

L'invention a également pour objet un procédé d'automatisation de lavage de véhicule à l'aide d'une installation du type précité après mise en place du véhicule dans son emplacement de stationnement et reconnaissance de la géométrie extérieure du véhicule, ledit procédé comprenant une étape de lavage au cours de laquelle la rampe de lavage formée par les buses s'étend sensiblement orthogonalement au plan d'appui au sol de la base de la structure support et une étape de lavage au cours de laquelle la rampe de lavage formée par les buses s'étend sensiblement parallèlement au plan d'appui au sol de la base de la structure support de l'installation.

L'invention sera bien comprise à la lecture de la description suivante d'exemples de réalisation, en référence aux dessins annexés dans lesquels :
La figure 1 représente une vue schématique en perspective d'une installation conforme à l'invention en position d'extension du bras porte-buses et verticale de la rampe porte-buses formée par la série de buses du bras porte-buses, la structure support ayant été représentée partiellement en transparence ;

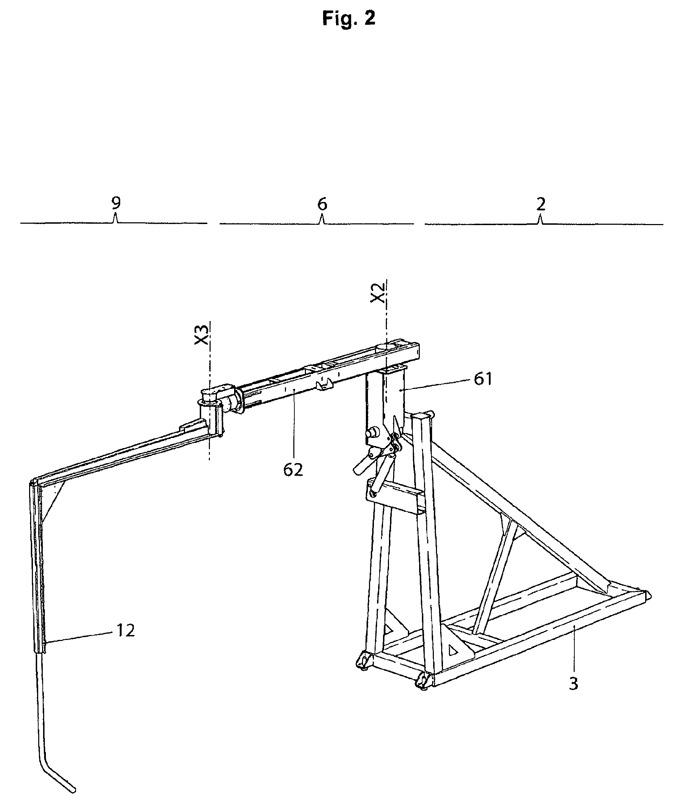

La figure 2 représente une vue schématique en perspective d'une installation conforme à l'invention en position d'extension du bras et verticale de la rampe de buses, la structure support ayant été partiellement représentée ;
Les figures 3 à 7 représentent les déplacements des bras manipulateurs et porte-buses de l'installation de la figure 2 au cours du nettoyage des parties dites verticales du véhicule à l'aide de la rampe de buses en position dite verticale ;
Les figures 8 à 11 représentent le passage de l'installation de la figure 2 d'une configuration dans laquelle la rampe de buses du bras porte-buses est en configuration verticale pour le nettoyage des parties dites verticales du véhicule à une configuration horizontale pour le nettoyage des parties sensiblement horizontales du véhicule ;

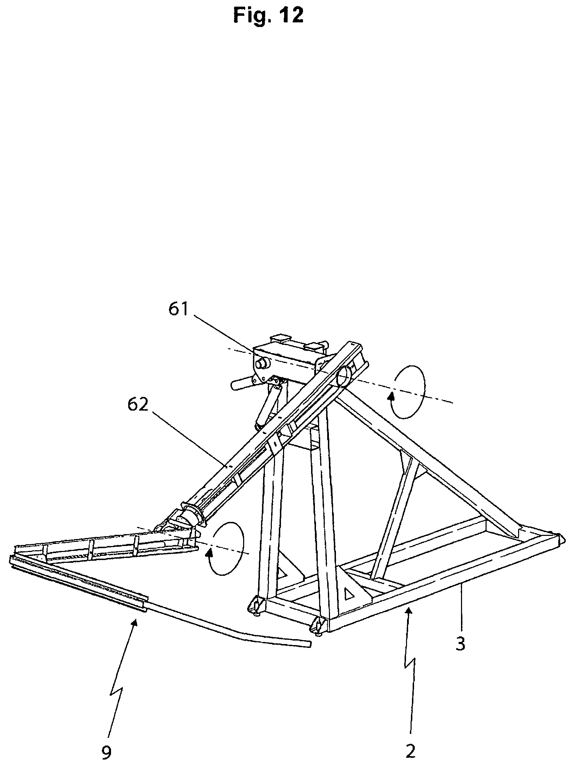

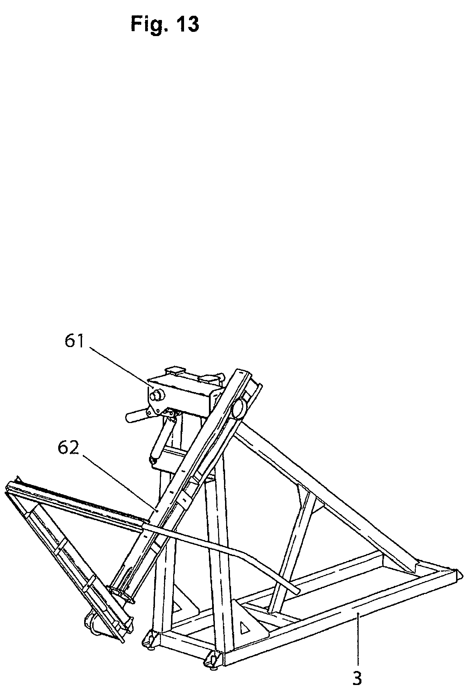

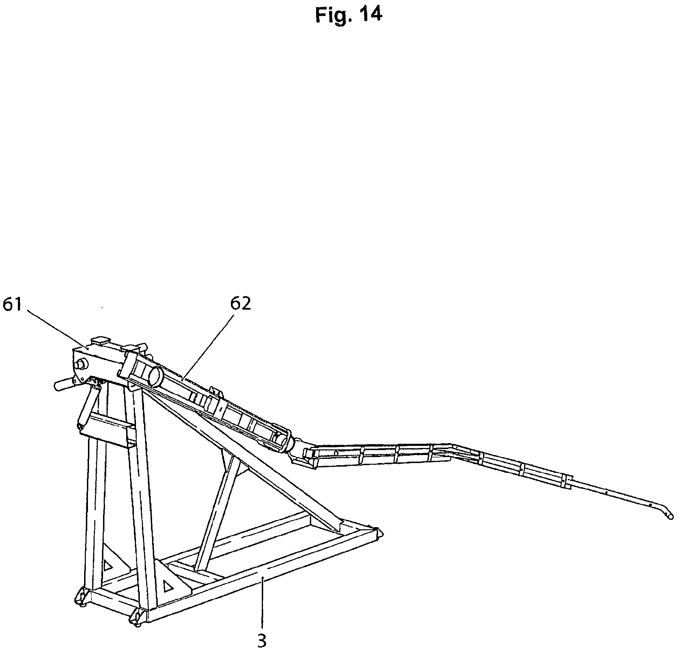

Les figures 12 à 14 illustrent l'installation de la figure 2 au cours du nettoyage des parties dites horizontales du véhicule à l'aide de la rampe de buses du bras porte-buses en position dite horizontale ;
Les figures 15 et 16 représentent, sous forme de vues schématiques, les déplacements successifs du bras manipulateur et du bras porte-buses au cours d'un cycle de nettoyage des parties dites horizontales du véhicule ;
Les figures 17 et 18 représentent, sous forme de vues schématiques prises depuis l'avant du véhicule (figure 17) et depuis l'arrière du véhicule (figure 18), les déplacements successifs du bras manipulateur et du bras porte-buses au cour d'un cycle de nettoyage des parties dites verticales du véhicule ;
La figure 19 illustre une vue de dessus d'une installation apte à permettre le nettoyage de deux véhicules placés dans deux emplacements de stationnement disposés côte à côte.

Comme mentionné ci-dessus, l'installation de lavage, objet de l'invention, et plus particulièrement destinée au lavage de véhicule automobile. Cette installation 1 de lavage comprend une structure 2 support comportant une base 3 d'appui au sol reposant au sol par des pieds ou un piétement délimitant un plan d'appui au sol de ladite base.

Cette installation comprend encore un bras 6 manipulateur porté par la structure 2 support et monté mobile par rapport à la structure 2 support et un bras 9 porte-buses de lavage couplé de manière mobile audit bras 6 manipulateur.

La structure 2 support est ici formée de deux montants 4 maintenus entre eux par des traverses d'une base 3 affectant la forme d'un cadre horizontal dont l'un des côtés forme l'une des traverses de liaison des montants 4 et d'un élément 5 de contreventement, tel qu'un tirant, reliant le cadre vertical formé par les montants et les traverses et le cadre horizontal formé par la base en les maintenant sensiblement perpendiculairement entre eux.

Cette structure 2 peut être logée au moins partiellement à l'intérieur d'une enceinte de type armoire qui peut contenir notamment l'unité de pilotage de l'installation qui sera décrite ci-après et présenter en façade un dispositif d'affichage, comme cela sera également décrit ci-après.

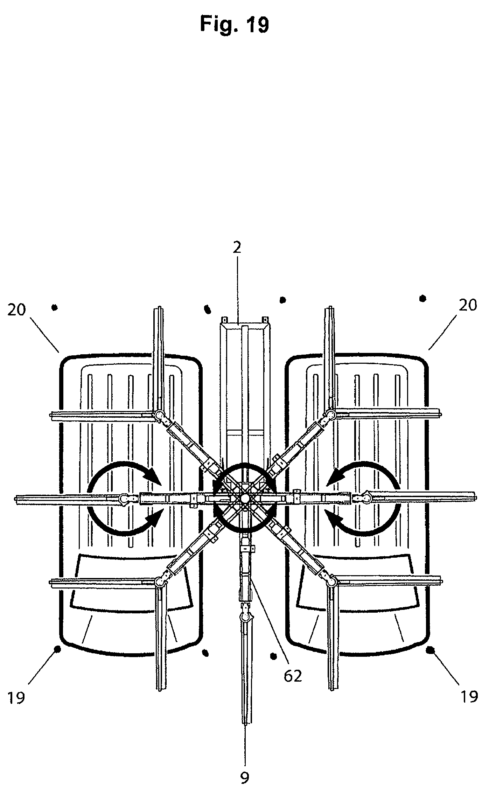

Cette structure 2 support est disposée le long d'un emplacement de stationnement de véhicule à nettoyer lorsque l'installation est destinée au nettoyage d'un seul véhicule. Cette structure 2 support est disposée le long de deux emplacements 20 de stationnement de véhicules à nettoyer, entre lesdits emplacements, lorsque l'installation est apte à permettre le nettoyage d'un véhicule pendant la mise en place ou l'enlèvement de l'autre véhicule de son emplacement. Ce cas est illustré à la figure 19.

La structure 2 support, qui est une structure fixe stationnaire, porte un bras 6 manipulateur. Ce bras 6 est formé d'une première section 61 de bras montée sur la structure 2 support à rotation autour d'un axe X1 horizontal parallèle au plan d'appui au sol de la base 3.

Cet axe X1 s'étend également sensiblement parallèlement à l'axe longitudinal de chaque emplacement de stationnement de véhicule à nettoyer comme l'illustrent les figures.

Le bras 6 manipulateur présente une deuxième section 62 de bras sensiblement orthogonale à ladite première section 61 de bras et couplée à ladite première section 61 de bras par une liaison 8 pivot d'axe X2 sensiblement parallèle à ladite première section 61 de bras.

Chaque première ou deuxième section de bras peut être elle-même formée d'un ou plusieurs tronçons de bras reliés entre eux de manière rigide ou articulée.

L'installation comporte encore un bras 9 porte-buses de lavage. Ce bras 9 porte-buses est un bras coudé formé de deux branches 91, 92 s'étendant sensiblement orthogonalement entre elles. La branche 91 est raccordée par son extrémité libre au bras 6 manipulateur. L'autre branche 92 porte les buses 12.

Ces buses 12 sont disposées, de préférence, alignées à la manière d'une rampe de buses sur ladite branche 92.

La liaison entre la branche 91 du bras 9 et le bras manipulateur, en particulier la deuxième section 62 dudit bras, comprend une liaison 10 à rotation autour d'un axe X3 sensiblement perpendiculaire à l'axe longitudinal de la deuxième section 62 de bras pour le déplacement du bras porte-buses entre une position repliée de la branche 91 du bras porte-buses le long de ladite deuxième section 62 du bras manipulateur et une position d'extension de la branche 91 du bras porte-buses dans laquelle elle s'étend sensiblement dans l'alignement de la deuxième section 62 de bras du bras 6 manipulateur et forme un prolongement de ladite section 62 de bras manipulateur.

La liaison entre la branche 91 du bras 9 et le bras manipulateur, en particulier, la deuxième section 62 dudit bras, comprend également une liaison 11 à rotation autour d'un axe X4 sensiblement parallèle à l'axe longitudinal de la deuxième section 62 de bras du bras manipulateur.

Toutes les liaisons à rotation ou à pivotement décrites ci-dessus comportent à chaque fois un actionneur dont le fonctionnement permet un déplacement relatif entre eux des éléments reliés par ladite liaison.

La branche 92 du bras 9 porte-buses est équipée de buses. Ces buses sont disposées écartées l'une de l'autre le long de la branche à la manière d'une rampe de buses. Des moyens, tels que conduite, pompe, sont prévus pour le raccordement des buses à une source d'alimentation en fluide de nettoyage. Au moins une partie de ces moyens peut être logée à l'intérieur de l'enceinte de type armoire, associée à la structure 2 support. Le détail de ces moyens n'est pas décrit car il est bien connu à ceux versés dans cet art. Ce sont donc les bras manipulateurs et porte-buses qui assurent le transport d'énergie, des signaux de commande et de fluide sous pression. Ce transport peut s'opérer par le biais d'un guidage et d'un système enrouleur autour de la liaison 10 à rotation sans utilisation de collecteur ou de joint tournant.

Le fluide projeté par les buses est à une pression élevée pour un lavage haute pression.

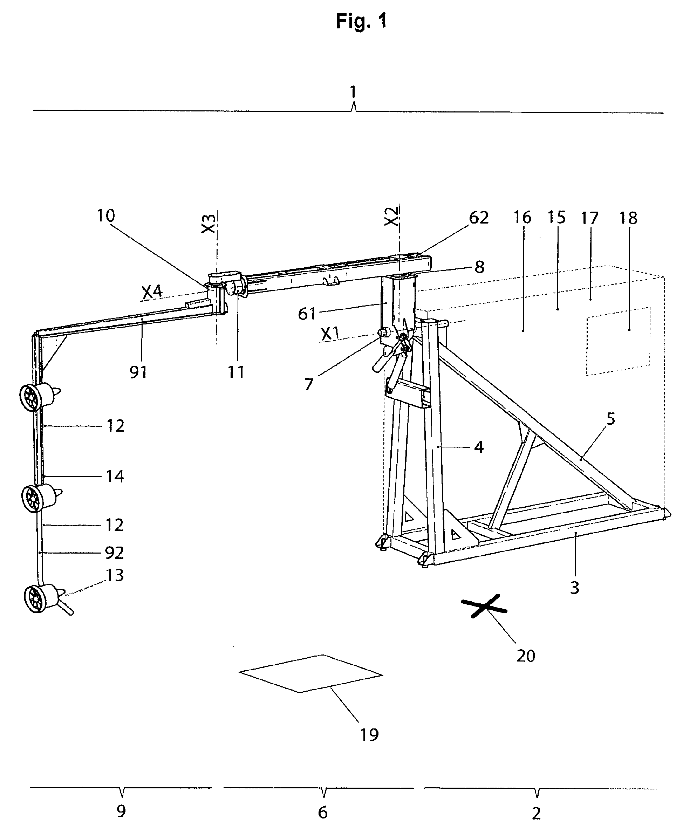

La branche 92 du bras porte-buses peut également être équipée de moyens 13 de soufflage d'air comme l'illustre la figure 1. Ces moyens de soufflage peuvent se présenter sous forme d'une turbine embarquée sur la rampe et apte à générer une lame d'air. Dans l'exemple représenté à la figure 1, la branche 92 du bras porte-buses porte trois turbines décalées axialement le long de ladite branche. Chaque turbine comprend un corps tubulaire, un orifice d'admission d'air et un orifice d'évacuation d'air disposés à chaque extrémité dudit corps et des moyens de circulation forcée d'air disposés à l'intérieur dudit corps entre lesdits orifices.

L'installation comporte encore des moyens 14 de détection et/ou de mesure de la géométrie extérieure du véhicule, des moyens 15 de stockage des paramètres caractérisant cette géométrie extérieure et une unité 16 de pilotage des déplacements relatifs du bras 9 porte-buses et du bras 6 manipulateur au moins en fonction desdits paramètres.

Les moyens 14 de détection peuvent être formés par des capteurs de proximité ou de distance, tels que des scrutateurs ou télémètres à onde-radio, optiques ou soniques disposés sur le bras porte-buses.

L'unité 16 de pilotage est formée par une unité électronique et informatique de traitement et de calcul. Ladite unité peut être réalisée sous la forme d'un circuit électronique muni d'un micro-contrôleur ou d'un micro-processeur associé à une mémoire de stockage de données. Ainsi, lorsque dans la suite de la description, il est précisé que l'unité est configurée pour réaliser une opération donnée, cela signifie que ladite unité comprend des instructions informatiques permettant de réaliser ladite opération.

Les moyens 15 de stockage des paramètres caractérisant la géométrie extérieure du véhicule peuvent être intégrés à l'unité de pilotage. L'unité de pilotage est configurée pour recevoir des données d'entrée fournies par les moyens 14 de détection et délivrer des signaux de commande notamment aux moto-réducteurs équipant les liaisons à rotation ou à pivot des bras de l'installation en fonction desdites données d'entrée.

L'installation comporte également généralement un afficheur qui permet de sélectionner un programme de lavage et l'unité de pilotage commande les déplacements des bras au moins en fonction du programme sélectionné et des données relatives à la géométrie extérieure du véhicule.

L'unité de pilotage peut être intégrée à l'intérieur de la structure 2 support, et le dispositif d'affichage placé sur l'une des parois de ladite structure support affectant la forme d'une armoire.

D'autres données peuvent être également prises en compte par l'unité de pilotage pour gérer le déplacement des bras. Ainsi, des capteurs de détection de zones sales du véhicule peuvent être intégrés pour augmenter le nombre ou le temps de passage dans lesdites zones.

La période de l'année peut être un paramètre pris en compte pour adapter les programmes de lavage au niveau du temps de passage. Ainsi, en été, le temps de passage sur certaines zones avant de voiture est plus important et, en hiver, c'est le temps de passage sur le bas de caisse qui est allongé.

Un programme de lavage comprend généralement une phase de pulvérisation de mousse, une phase de nettoyage par jet haute pression avec une eau adoucie, une phase de rinçage par eau déminéralisée et une phase de séchage optionnelle.

Enfin, l'installation peut comporter une ou plusieurs séries de moyens 19 de matérialisation d'un emplacement 20 de stationnement de véhicule. Ces moyens 19 de matérialisation comprennent par exemple un sabot positionné au sol et deux couples d'émetteurs/récepteurs fonctionnant par exemple suivant une technique d'infrarouge. L'un des couples est positionné à l'entrée de l'emplacement de stationnement du véhicule à nettoyer, l'autre à la sortie dudit emplacement.

Le faisceau émis par l'émetteur est coupé pendant la pénétration du véhicule dans ledit emplacement. Dès que le faisceau est rétabli cela signifie que le véhicule se trouve en principe dans l'emplacement. Un même couple d'émetteur/récepteur est disposé en sortie dudit emplacement. Ces moyens de détection d'entrée et de sortie définissent un périmètre de sécurité dont le franchissement provoque l'arrêt de l'installation pendant le fonctionnement.

Dans le cas d'une installation comportant deux emplacements, chaque emplacement est équipé de moyens de matérialisation tels que décrits ci-dessus.

L'installation peut comporter encore des moyens de détection de la position du véhicule à l'intérieur dudit emplacement et des moyens d'émission d'un signal d'alerte lorsque le positionnement est incorrect.

Ces moyens peuvent être formés par un capteur disposé sur le sabot.

Comme l'utilisateur peut choisir entre plusieurs programmes, il est nécessaire qu'il quitte son véhicule à cet effet. C'est l'une des raisons pour lesquelles le système peut comprendre au moins un organe de signalisation à distance du conducteur afin de lui indiquer que le positionnement du véhicule en vue du lavage est correct et qu'il peut donc le quitter. Cet organe émet à cet effet un signal de positionnement correct lorsque le véhicule est au-delà des moyens de détection d'entrée et en deçà des moyens de détection de sortie et renseigne au contraire l'utilisateur quand cela n'est vrai et qu'il faut par conséquent encore déplacer le véhicule.

Enfin, l'installation comporte un local technique de préférence intégré à la structure support. Ce local technique peut loger un système de filtration, un système de traitement d'eau (adoucisseur et osmoseur), les pompes à haute pression, un système de préparation de mousse, la pompe doseuse pour la pulvérisation du produit, un bac tampon, un coffret électrique avec la gestion par automate programmable, un système hors gel, une interface opérateur...

L'installation telle que décrite ci-dessus peut fonctionner de la manière suivante:
Lorsque le véhicule traverse le périmètre de sécurité les organes de détection en entrée et leurs équivalents en sortie communiquent la détection du franchissement à l'unité centrale électronique de commande.

Lorsque les organes de détection de l'entrée indiquent un tel franchissement, un organe de signalisation indique à l'usager du véhicule d'avancer. Lorsque le véhicule est à l'intérieur du périmètre de sécurité, c'est-à-dire qu'il n'a pas franchi les moyens de détection de sortie, l'indication d'avancer disparaît. Si l'usager positionne son véhicule trop loin ou franchit par conséquent les moyens de détection de sortie, les moyens de signalisation mentionnés auparavant indiquent à l'usager de reculer.

Lorsque le véhicule est correctement positionné et que les moyens de détection d'entrée ou de sortie n'indiquent plus aucun franchissement, ces moyens de signalisation demandent à l'usager de quitter son véhicule et de rejoindre le panneau de sélection du programme de lavage situé à l'extérieur de l'emplacement du véhicule.

L'usager peut aller choisir un programme de lavage de son véhicule parmi une liste prédéfinie de possibilités décrites sur le panneau de sélection. Les moyens de paiement sont disposés adjacents à l'organe de sélection.

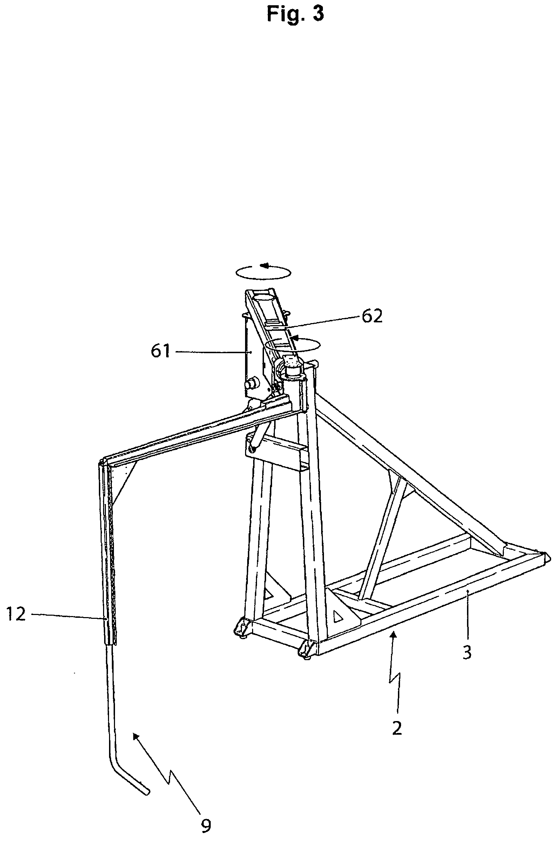

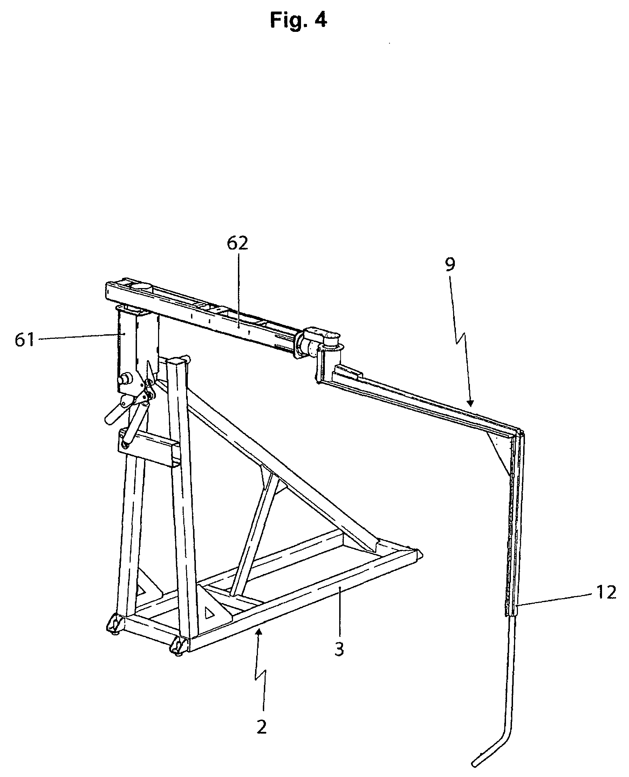

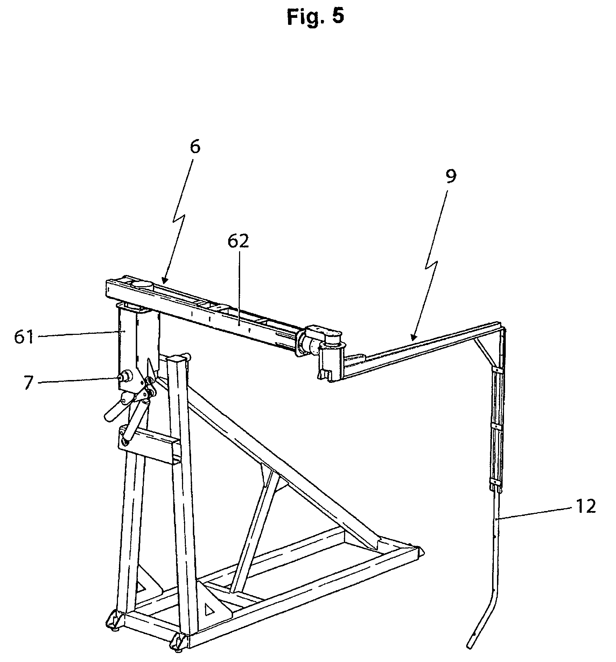

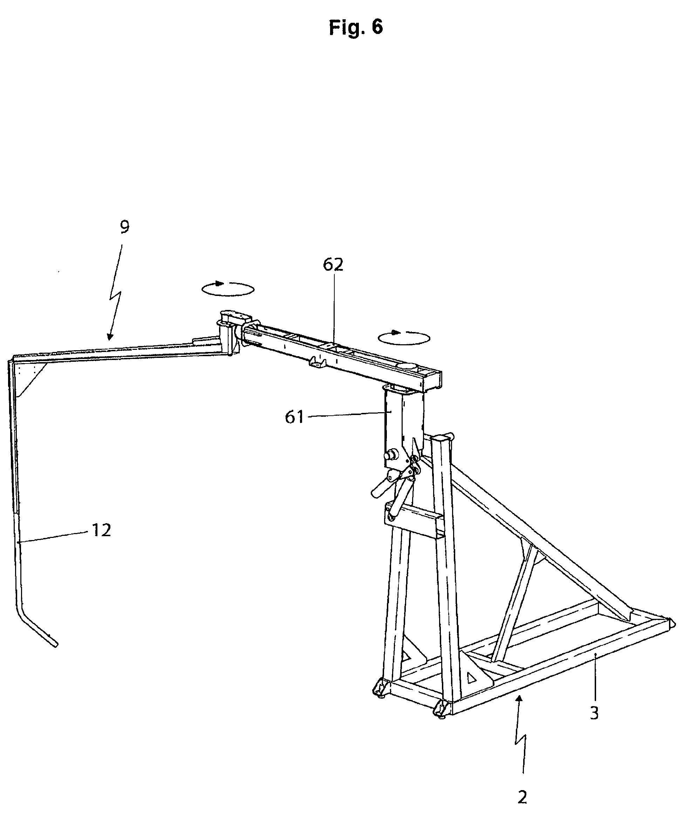

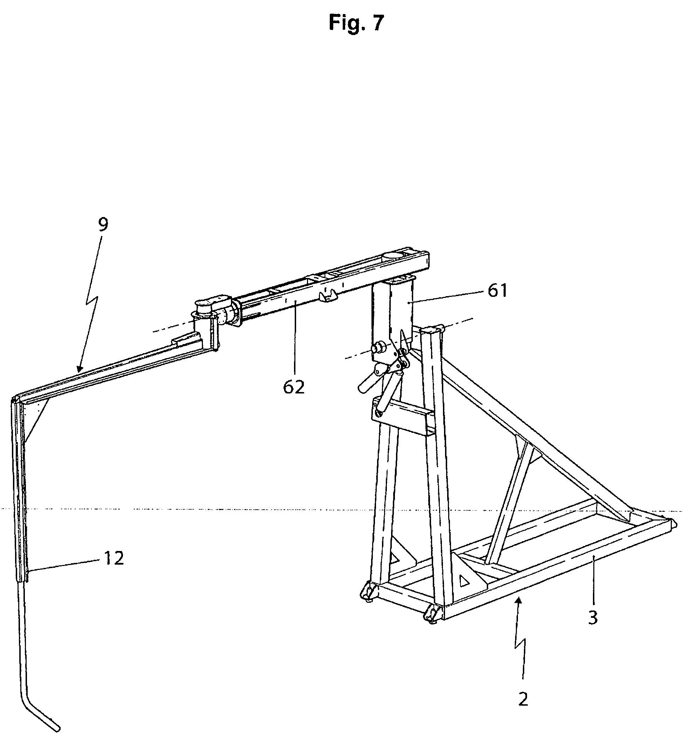

Lorsque la sélection est opérée, le déplacement des bras de l'installation peut débuter. Le premier cycle est un cycle de détection du profil du véhicule. Ce cycle comprend une acquisition du profil extérieur du véhicule et une acquisition du profil vertical du véhicule. Cette phase d'acquisition correspond aux figures 3 à 7.

Au cours de cette acquisition, la première section 61 de bras du bras 6 manipulateur relié à la structure 2 support est verticale, c'est-à-dire perpendiculaire au plan d'appui au sol de la base de la structure 2 support, de même que les axes X2 de liaison des première et deuxième sections 61, 62 de bras du bras 6 manipulateur et X3 de liaison du bras 6 manipulateur au bras 9 porte-buses et la rampe de buses du bras porte-buses.

L'acquisition s'opère uniquement par rotation relative du bras porte-buses et de la deuxième section 62 de bras du bras 6 manipulateur autour des axes X2 et X3.

En position de départ, la rampe porte-buses est placée le long d'un des flancs du véhicule au niveau de sa zone médiane. Dans cette position, le bras porte-buses est replié contre la deuxième section 62 de bras du bras 6 manipulateur. Par rotation combinée autour de X2 et X3, la rampe porte-buses est amenée à l'avant du véhicule puis le long de l'autre flanc du véhicule puis à l'arrière du véhicule puis devant le premier flanc du véhicule jusqu'à sa zone médiane avant de refaire le trajet en sens inverse.

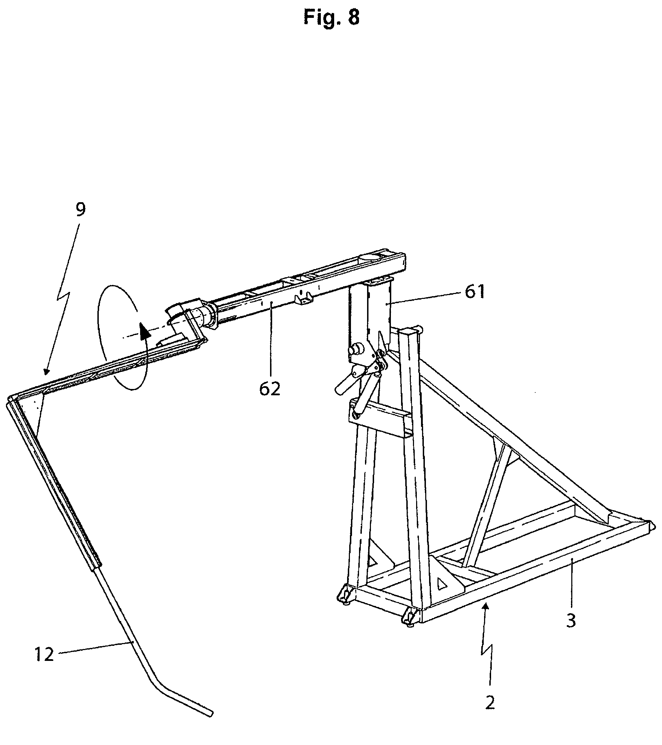

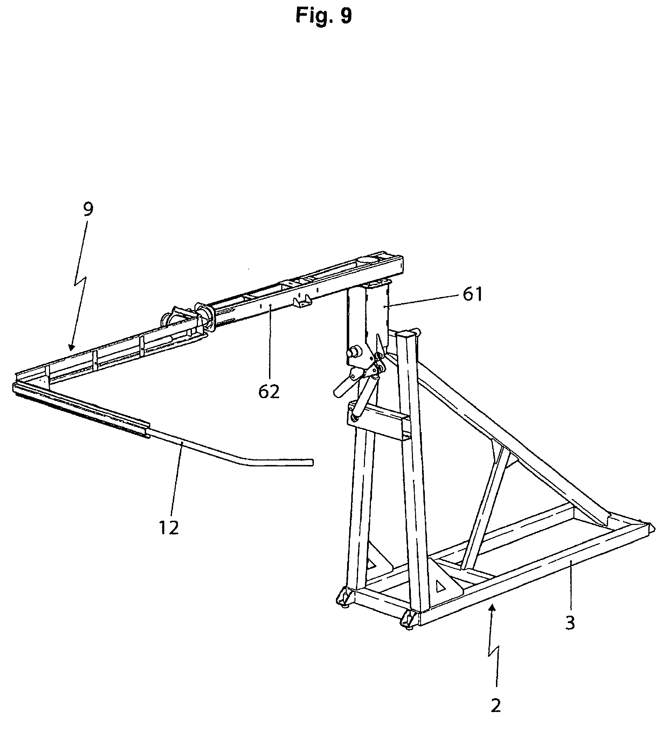

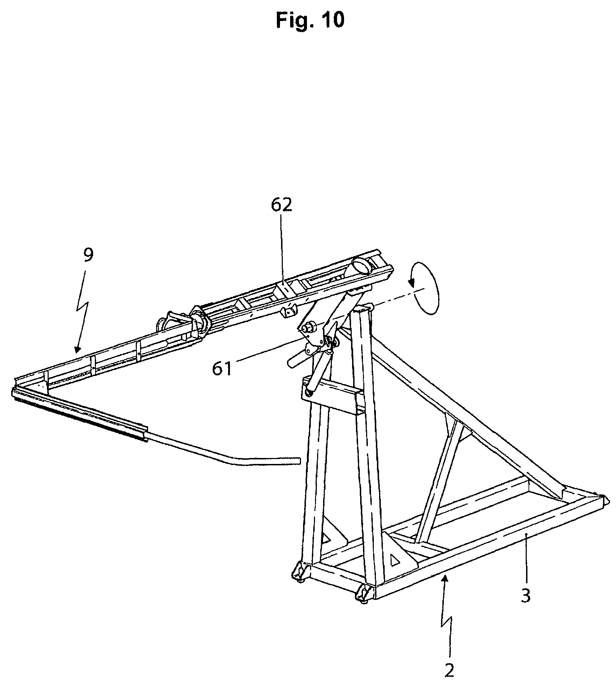

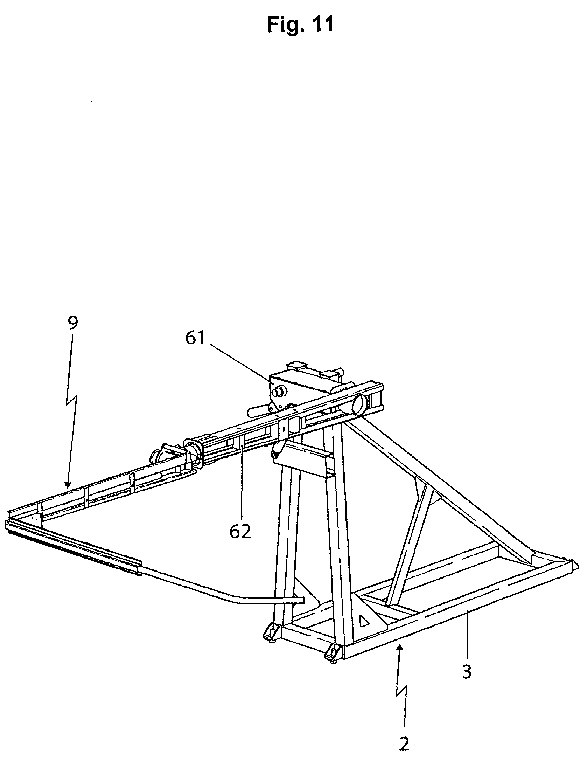

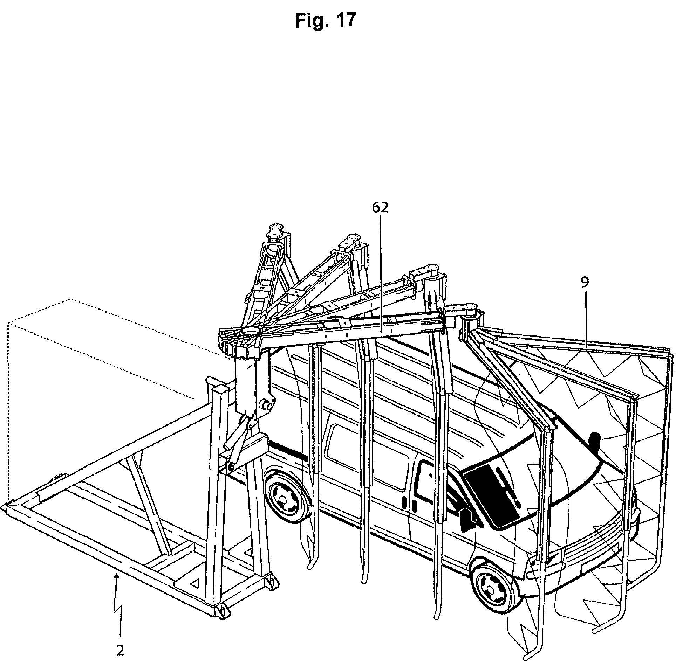

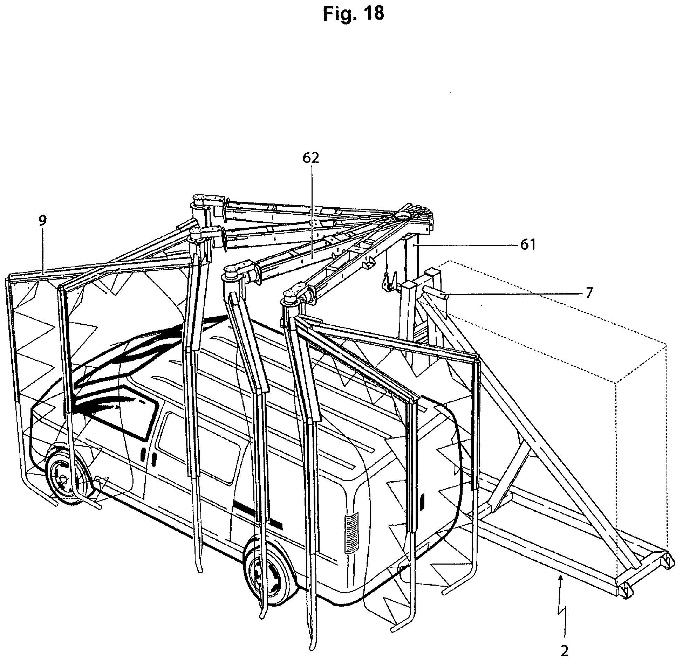

Au cours de ces déplacements, la rampe porte-buses se déplace sensiblement parallèlement à elle-même. Cette acquisition est représentée aux figures 17 et 18. L'acquisition est achevée. Au cours de cette acquisition, il peut être projeté un produit spécifique aux jantes du véhicule lors du mouvement aller et une mousse de lavage lors du mouvement retour. Cette acquisition peut être suivie par une phase de lavage à haute pression lors d'un nouveau déplacement incluant un mouvement aller et un mouvement retour. A l'issue de cette première phase, une seconde phase de lavage peut débuter. Pour ce faire, il convient de placer la rampe de buses formée par la deuxième branche 92 du bras 9 porte-buses en position horizontale. Ce positionnement s'opère par rotation combinée de la première section 61 de bras du bras 6 manipulateur autour de son axe X1 de liaison à la structure 2 support pour amener ledit bras en position couchée côté de l'emplacement de stationnement de parking du véhicule à nettoyer, et rotation du bras porte-buses autour de l'axe X4 de liaison du bras porte-buses au bras manipulateur, cet axe X4 s'étendant parallèlement à l'axe longitudinal de la deuxième section 62 de bras du bras 6 manipulateur. Ces deux rotations sont représentées aux figures 8 à 11.

Dans cette position horizontale de la rampe porte-buses, les mouvements aller et retour s'opèrent à nouveau uniquement par rotation autour des axes X2 et X3 comme pour l'autre phase d'acquisition.

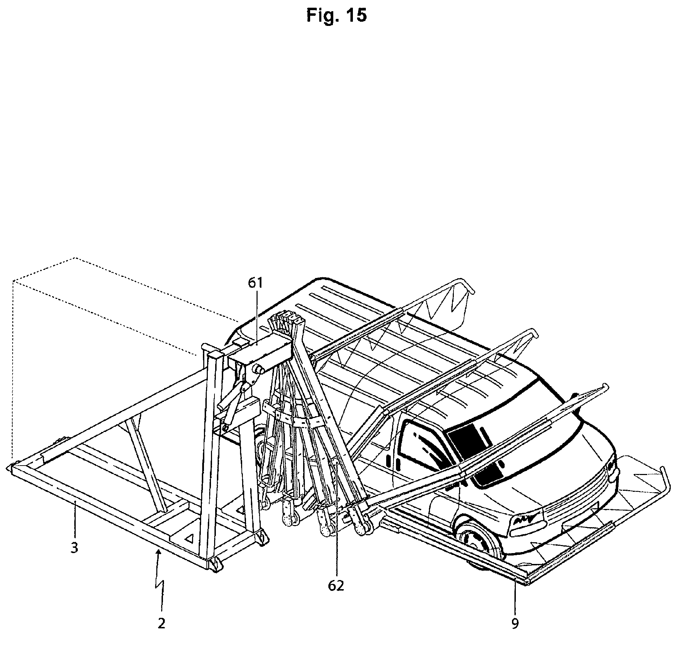

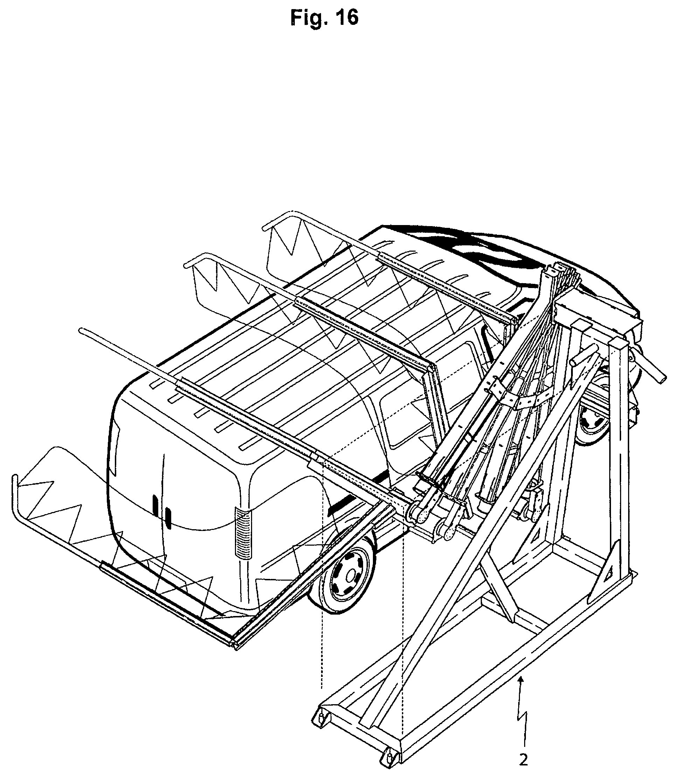

La rampe porte-buses horizontale est positionnée à l'avant du véhicule au niveau de la calandre puis se déplace au-dessus du capot puis au-dessus du toit et de l'arrière du véhicule avant d'effectuer le trajet inverse. Ces déplacements sont illustrés aux figures 15 et 16.

Le lavage peut comporter une phase de nettoyage par jet haute pression, une phase de rinçage par eau déminéralisée et éventuellement une phase de séchage.

Au cours de ces phases de lavage, les mouvements des bras sont organisés pour permettre à chaque fois un traitement du profil extérieur du véhicule, et un traitement des surfaces dites horizontales du véhicule.

Lorsque le programme de lavage est achevé, les bras manipulateur et porte-buses peuvent revenir en position d'acquisition de la géométrie et des dimensions du véhicule et traiter un véhicule placé sur un emplacement parallèle à l'emplacement occupé par le véhicule venant d'être lavé pour débuter l'acquisition des données de ce deuxième véhicule. Le premier véhicule peut donc quitter en temps masqué son emplacement de stationnement et un nouveau véhicule peut y prendre place également en temps masqué.

## Revendications

1. Installation (1) de lavage de véhicule du type comprenant une structure (2) support comportant une base (3) d'appui au sol, un bras (6) manipulateur porté par la structure (2) support et monté mobile par rapport à la structure (2) support, et un bras (9) porte-buses de lavage couplé, de manière mobile, audit bras (6) manipulateur,
dans laquelle la structure (2) support est une structure dite fixe destinée à être positionnée de manière stationnaire le long d'au moins un emplacement (20) de stationnement de véhicule à nettoyer, le bras (6) manipulateur étant formé d'une première section (61) de bras montée sur la structure (2) support à rotation autour d'un axe (X1) dit horizontal parallèle au plan d'appui au sol de la base (3) et d'une deuxième section (62) de bras, sensiblement orthogonale à ladite première section (61) de bras, et couplée à ladite première section (61) de bras par une liaison (8) pivot d'axe (X2) sensiblement parallèle à ladite première section (61) de bras, **caractérisée en ce que** le bras (9) porte-buses est un bras coudé couplé à ladite deuxième section (62) de bras manipulateur d'une part, par une liaison (10) à rotation autour d'un premier axe (X3) sensiblement orthogonal à l'axe longitudinal de ladite deuxième section (62) de bras pour le déplacement du bras (9) porte-buses entre une position repliée le long de ladite deuxième section (62) de bras et une position d'extension dans laquelle il forme un prolongement de ladite deuxième section (62) de bras et, d'autre part, par une liaison (11) à rotation autour d'un deuxième axe (X4) sensiblement parallèle à l'axe longitudinal de la deuxième section (62) de bras du bras (6) manipulateur.

2. Installation (1) selon la revendication 1,
**caractérisée en ce que** le bras (9) coudé porte-buses est formé de deux branches (91, 92) sensiblement en équerre, l'une (91) des branches (91, 92) étant raccordée, par son extrémité (12) libre, au bras (61) manipulateur, l'autre branche (92) portant les buses (12), lesdites buses étant disposées, de préférence alignées à la manière d'une rampe de buses, sur ladite branche (92).

3. Installation (1) selon la revendication 2,
**caractérisée en ce que** la branche (92) porte-buses du bras (9) porte-buses comporte en outre des moyens (13) de séchage par soufflage de fluide.

4. Installation (1) selon la revendication 3,
**caractérisée en ce que** les moyens (13) de séchage comprennent au moins une turbine.

5. Installation (1) selon l'une des revendications précédentes,
**caractérisée en ce que** chaque liaison (7, 8, 10, 11) pivot ou à rotation entre bras (9) porte-buses et bras (6) manipulateur ou entre bras (6) manipulateur et structure (2) support ou entre sections (61, 62) de bras du bras (6) manipulateur est une liaison pilotée comprenant, de préférence, au moins un actionneur.

6. Installation (1) selon l'une des revendications précédentes,
**caractérisée en ce qu'**elle comporte des moyens (14) de détection et/ou de mesure de la géométrie extérieure du véhicule, des moyens (15) de stockage des paramètres caractérisant cette géométrie extérieure et une unité (16) de pilotage des déplacements relatifs du bras (9) porte-buses et du bras (6) manipulateur au moins en fonction desdits paramètres.

7. Installation (1) selon la revendication 6,
**caractérisée en ce que** les moyens (14) de détection et/ou de mesure de la géométrie extérieure du véhicule sont portés par le bras (9) porte-buses.

8. Installation (1) selon l'une des revendications 6 ou 7,
**caractérisée en ce que** l'installation comporte des moyens (17) de mémorisation d'une pluralité de programmes de lavage, des moyens (18) de sélection d'au moins un programme parmi lesdits programmes de lavage mémorisés et **en ce que** l'unité (16) de pilotage est configurée pour piloter les déplacements relatifs du bras (9) porte-buses et du bras (6) manipulateur au moins en fonction du programme sélectionné.

9. Installation (1) selon l'une des revendications précédentes,
**caractérisée en ce qu'**elle comporte au moins une série, de préférence au moins deux séries, de moyens (19) de matérialisation d'un emplacement (20) de stationnement du véhicule à nettoyer, chaque série étant positionnable d'un côté ou de l'autre de la structure support (2) pour permettre la matérialisation d'au moins deux emplacements.

10. Installation (1) selon la revendication 9,
**caractérisée en ce que** la ou chaque série de moyens (19) de matérialisation comprend des moyens, tels qu'un sabot, de matérialisation au sol dudit emplacement (20) de stationnement et/ou des moyens de délimitation du périmètre dudit emplacement (20) de stationnement associés à des moyens de détection de l'entrée et de la sortie dudit périmètre.

11. Installation (1) selon la revendication 10,
**caractérisée en ce que** l'installation comporte des moyens de détection de la position du véhicule à l'intérieur dudit emplacement et des moyens d'émission d'un signal d'alerte lorsque le positionnement est incorrect.

12. Installation (1) selon l'une des revendications précédentes,
**caractérisée en ce que**, à l'état installé de la structure support (2) le long d'un, ou entre deux, emplacement(s) (20) de stationnement de véhicule à nettoyer, l'axe (X1) de liaison de la première section (61) de bras à la structure support (2) s'étend sensiblement parallèlement à l'axe longitudinal du ou des emplacements (20) de parking.

## Patentansprüche

1. Fahrzeugwaschanlage (1) der Bauart, die eine tragende Struktur (2) umfasst, die eine Stützbasis (3) auf dem Boden, einen von der tragenden Struktur (2) getragenen und im Verhältnis zur tragenden Struktur (2) beweglich montierten Handhabungsarm (6) und einen mit dem Handhabungsarm (6) beweglich gekoppelten Düsenträger-Wascharm (9) aufweist,
wobei die tragende Struktur (2) eine feste Struktur ist, die bestimmt ist, entlang von mindestens einem Abstellplatz (20) eines zu reinigenden Fahrzeugs stationär aufgestellt zu sein, wobei der Handhabungsarm (6) von einem ersten Armabschnitt (61), der auf der tragenden Struktur (2) um eine zur Stützebene auf dem Boden der Basis (3) parallele horizontale Achse (X1) rotierend montiert ist, und einem zweiten Armabschnitt (62), der zum ersten Armabschnitt (61) etwa orthogonal ist und anhand einer Drehzapfenverbindung (8) mit einer Achse (X2), die zum ersten Armabschnitt (61) etwa parallel ist, am ersten Armabschnitt (61) gekoppelt ist, gebildet ist, **dadurch gekennzeichnet, dass** der Düsenträgerarm (9) ein gekrümmter Arm ist, der an den zweiten Abschnitt (62) des Handhabungsarms einerseits anhand einer Rotationsverbindung (10) um eine erste Achse (X3), die für die Verlagerung des Düsenträgerarms (9) zwischen einer am zweiten Armabschnitt (62) entlang eingeklappten Position und einer erweiterten Position, in welcher er eine Verlängerung des zweiten Armabschnitts (62) bildet, etwa orthogonal zur Längsachse des zweiten Armabschnitts (62) ist, und andererseits anhand einer Rotationsverbindung (11) um eine zweite Achse (X4), die etwa parallel zur Längsachse des zweiten Armabschnitts (62) des Handhabungsarms (6) ist, gekoppelt ist.

2. Anlage (1) nach Anspruch 1,
**dadurch gekennzeichnet, dass** der gekrümmte Düsenträgerarm (9) von zwei etwa winkligen Schenkeln (91, 92) gebildet ist, wobei einer (91) der Schenkel (91, 92) an seinem freien Ende (12) mit dem Handhabungsarm (61) verbunden ist, wogegen der andere Schenkel (92) die Düsen (12) trägt, wobei die Düsen vorzugsweise in der Art einer Düsenrampe auf dem Schenkel (92) aneinandergereiht angeordnet sind.

3. Anlage (1) nach Anspruch 2,
**dadurch gekennzeichnet, dass** der Düsenträgerschenkel (92) des Düsenträgerarms (9) ferner Trocknungsmittel (13) durch Fluidblasen aufweist.

4. Anlage (1) nach Anspruch 3,
**dadurch gekennzeichnet, dass** die Trocknungsmittel (13) mindestens eine Turbine umfassen.

5. Anlage (1) nach einem der vorangehenden Ansprüche,
**dadurch gekennzeichnet, dass** jede Drehzapfen- oder Rotationsverbindung (7, 8, 10, 11) zwischen Düsenträgerarm (9) und Handhabungsarm (6) oder zwischen Handhabungsarm (6) und tragenden Struktur (2) oder zwischen Armabschnitten (61, 62) des Handhabungsarms (6) eine gesteuerte Verbindung ist, die vorzugsweise mindestens einen Aktuator umfasst.

6. Anlage (1) nach einem der vorangehenden Ansprüche,
**dadurch gekennzeichnet, dass** sie Detektions- und/oder Messmittel (14) der äußeren Geometrie des Fahrzeugs, wobei Speichermittel (15) der Parameter diese äußere Geometrie kennzeichnen, und eine Steuervorrichtung (16) der relativen Verlagerungen des Düsenträgerarms (9) und des Handhabungsarms (6) mindestens in Abhängigkeit von den Parametern aufweist.

7. Anlage (1) nach Anspruch 6,
**dadurch gekennzeichnet, dass** die Detektions- und/oder Messmittel (14) der äußeren Geometrie des Fahrzeugs vom Düsenträgerarm (9) getragen werden.

8. Anlage (1) nach einem der Ansprüche 6 oder 7,
**dadurch gekennzeichnet, dass** die Anlage Speichermittel (17) einer Vielzahl von Waschprogrammen, Auswahlmittel (18) mindestens eines Programms aus den gespeicherten Waschprogrammen aufweist und dass die Steuereinheit (16) konfiguriert ist, um die relativen Verlagerungen des Düsenträgerarms (9) und des Handhabungsarms (6) mindestens in Abhängigkeit vom ausgewählten Programm zu steuern.

9. Anlage (1) nach einem der vorangehenden Ansprüche,
**dadurch gekennzeichnet, dass** sie mindestens eine Reihe, vorzugsweise mindestens zwei Reihen, von Materialisierungsmitteln (19) eines Abstellplatzes (20) des zu reinigenden Fahrzeugs aufweist, wobei jede Reihe auf der einen oder der anderen Seite der tragenden Struktur (2) positionierbar ist, um die Materialisierung von mindestens zwei Abstellplätzen zu erlauben.

10. Anlage (1) nach Anspruch 9,
**dadurch gekennzeichnet, dass** die oder jede Reihe von Materialisierungsmitteln (19) Materialisierungsmittel wie ein Klotz auf dem Boden des Abstellplatzes (20) und/oder Begrenzungsmittel des Umfangs des Abstellplatzes (20), die Detektionsmitteln des Eingangs und des Ausgangs des Umfangs zugeordnet sind, umfasst.

11. Anlage (1) nach Anspruch 10,
**dadurch gekennzeichnet, dass** die Anlage Detektionsmittel der Position des Fahrzeugs im Innern des Abstellplatzes und Sendemittel eines Warnsignals, wenn die Positionierung nicht korrekt ist, aufweist.

12. Anlage (1) nach einem der vorangehenden Ansprüche,
**dadurch gekennzeichnet, dass** sich die Verbindungsachse (X1) des ersten Armabschnitts (61) an der tragenden Struktur (2) im aufgestellten Zustand der tragenden Struktur (2) entlang eines Abstellplatzes oder zwischen zwei Abstellplätzen (20) zu reinigender Fahrzeuge etwa parallel zur Längsachse des oder der Abstellplätze (20) erstreckt.

## Claims

1. A vehicle washing facility (1) of the type comprising a support structure (2) including a base (3) bearing on the ground, a handling arm (6) supported by the support structure (2) mounted movably relative to the support structure (2), and a washing nozzle support arm (9) movably coupled to said handling arm,
wherein the support structure (2) is a so-called fixed structure designed to be positioned in a stationary manner along at least one parking place (20) for a vehicle to be washed, the handling arm (6) being formed from a first arm section (61) mounted on the support structure (2) rotating around a so-called horizontal axis (X1) parallel to the bearing plate of the base (3) on the ground and a second arm section (62), substantially orthogonal to said first arm section (61), and coupled to said first arm section (61) by a pivot link (8) with axis (X2) substantially parallel to said first arm section (61), **characterized in that** the nozzle support arm (9) is a bent arm coupled to said second handling arm section (62) on the one hand, by a link (10) rotating around a first axis (X3) substantially orthogonal to the longitudinal axis of said second arm section (62) to move the nozzle support arm (8) between a position bent along said second arm section (62) and an extension position in which it forms an extension of said second arm section (62), and on the other hand, by a link 11 rotating around a second axis (X4) substantially parallel to the longitudinal axis of the second arm section (62) of the handling arm (6).

2. The facility (1) according to claim 1,
**characterized in that** the bent nozzle support arm (9) is formed from two substantially square-shaped branches (91, 92), one (91) of the branches (91, 92) being connected, by its free end (12), to the handling arm (61), the other branch (92) bearing the nozzles (12), said nozzles being positioned, preferably aligned like a nozzle ramp, on said branch (92).

3. The facility (1) according to claim 2,
**characterized in that** the nozzle support branch (92) of the nozzle support arm (9) further includes driving means (13) by fluid blowing.

4. The facility (1) according to claim 3,
**characterized in that** the driving means (13) comprise at least one turbine.

5. The facility (1) according to one of the preceding claims,
**characterized in that** each pivot or rotating link (7, 8, 10, 11) between nozzle support arm (9) and handling arm (6) or between handling arm (6) and support structure (2) or between arm sections (61, 62) of the handling arm (6) is a controlled link preferably comprising at least one actuator.

6. The facility (1) according to one of the preceding claims,
**characterized in that** it includes means (14) for detecting and/or measuring the outside geometry of the vehicle, means (15) for storing parameters characterizing this outside geometry and a unit (16) for steering relative movements of the nozzle support arm (9) and the handling arm (6) at least as a function of said parameters.

7. The facility (1) according to claim 6,
**characterized in that** the means (14) for detecting and/or measuring the outside geometry of the vehicle are supported by the nozzle support arm (9).

8. The facility (1) according to one of claims 6 or 7,
**characterized in that** the facility includes means (17) for storing a plurality of washing programs, means (18) for selecting at least one program from among said stored washing programs, and **in that** the steering unit (16) is configured to steer the relative movement of the nozzle support arm (9) and the handling arm (6) at least as a function of the selected program.

9. The facility (1) according to one of the preceding claims,
**characterized in that** it includes at least one series, preferably at least two series, of means (19) for embodying a parking place (20) for the vehicle to be washed, each series being able to be positioned on one side or the other of the support structure (2) to allow the embodiment of at least two spaces.

10. The facility (1) according to claim 9,
**characterized in that** the or each series of embodying means (19) comprises means, such as a boot, for embodying said parking place (20) on the ground and/or means for defining the perimeter of said parking place (20) associated with means for detecting the entry and exit from said perimeter.

11. The facility (1) according to claim 10,
**characterized in that** the facility includes means for detecting the position of the vehicle inside said parking place and means for emitting an alert signal when the positioning is incorrect.

12. The facility (1) according to one of the preceding claims,
**characterized in that**, in the installed state of the support structure (2) along one or two parking place(s) (20) of the vehicle to be washed, the axis (X1) connecting the first arm section (61) to the support structure (2) extends substantially parallel to the longitudinal axis of the parking place(s) (20).
